# EUROPEAN PATENT APPLICATION

(11) **EP 4 810 327 A1**
(43) Date of publication of application: **23.09.2026**
(21) Application number: 26164608.7
(22) Date of filing: 13.03.2026
(51) Int. Cl.: B60R 25/25, B60R 25/01, B60R 25/04

(54) **A VEHICLE ACCESS SYSTEM**

(30) Priority: 16.03.2025 IN 202541023298
(71) Applicant: TVS Motor Company Limited, 600006 Chennai (IN)
(72) Inventor: Naresh, Adepu, 600006 Chennai (IN); Narra, Anitha, 600006 Chennai (IN); Rajan, Sippy, 600006 Chennai (IN); Jinu, P Raj, 600006 Chennai (IN); Gollapalli, Chandra Kiran, 600006 Chennai (IN); Parag, Ashok Inamdar, 600006 Chennai (IN)
(74) Representative: Patentanwaltskanzlei Matschnig & Forsthuber OG

(57) **Abstract**

The present invention relates to a system and method for operating a vehicle (100) using biometric authentication for secure access. The system detects ambient light levels and selects an appropriate biometric authentication method through one or more biometric units (102) in the vehicle. The system captures biometric data and validates the authorized user for vehicle operation. If authentication fails, the system initiates a limp home mode and sends alert notifications to one or more devices (116) to notify the user. Additionally, the system sends a secondary authorization request to the personal device (124) of the user. Upon receiving approval, the system enables vehicle operation, if declined, operation is disallowed.

## Description

### FIELD OF THE INVENTION

The present subject matter is related, in general to a vehicle, and more particularly, but not exclusively to a system and method for accessing one or more components of a vehicle by authorized users of the vehicle.

### Background Of The Invention

Vehicles represent significant financial investments for individuals and businesses alike, often constituting one of their most valuable assets. In addition to their high monetary value, vehicles serve as essential tools for daily transportation, both for personal and professional use. As such, the protection and security of these vehicles are of paramount importance. The threat of vehicle theft remains one of the most pervasive concerns for vehicle owners, with the possibility of unauthorized access or operation carrying potentially severe consequences. Beyond the risk of theft, the unauthorized operation of a vehicle by an individual who does not have proper authorization can result in a range of safety and security risks, including accidents, misuse, or even illegal activities. Given these risks, vehicle security must be robust, effective, and able to address the increasing complexity of modern vehicles

In response to the increasing need for vehicle protection, various security practices and technologies have been developed over time. Traditionally, vehicle security relied on mechanical systems, such as locks, ignition keys, and steering wheel locks, to prevent unauthorized access and operation. However, as vehicles have become more advanced and integrated with digital technologies, these traditional methods have become insufficient in addressing the full spectrum of threats facing modern vehicles.

Today, vehicle security systems include a combination of physical and electronic components designed to restrict access to authorized users only. Anti-theft devices (ATDs) are one of the primary tools used to protect vehicles from theft. These devices include systems such as geo-location-based tracking, alarm systems, and immobilizers, which are designed to either deter theft attempts or prevent a vehicle from being started if unauthorized access is detected. ATDs can be factory-installed or added as aftermarket solutions and are designed to provide a buffer time during which theft can be prevented or authorities can be notified. Many modern vehicles are also equipped with keyless entry systems, which use proximity-based authentication to grant access to the vehicle. These systems, while more convenient for authorized users, have also raised concerns about vulnerability to hacking or relay attacks, where criminals can intercept and amplify the signal from the key fob to gain unauthorized access.

Despite the advances in vehicle security technology, current practices still face challenges that hinder their effectiveness in preventing vehicle theft and unauthorized use. One of the most significant issues with current security systems is the prevalence of false-positive alarms, particularly with alarm-based anti-theft devices. False alarms can lock authorized users out of their vehicles or send unnecessary signals to law enforcement, resulting in wasted time, effort, and resources. This can be especially problematic when the vehicle owner must provide proof of ownership or deal with legal consequences of a false alarm. The frustration and inconvenience caused by false-positive alarms contribute to a negative user experience, making some vehicle owners less likely to fully rely on or maintain the effectiveness of their security systems.

Another challenge is the vulnerability of traditional anti-theft devices to more sophisticated criminal methods. Thieves have become increasingly adept at bypassing traditional security mechanisms, including alarm systems, immobilizers, and keyless entry systems. For example, criminals can use relay attacks to capture and amplify the signal from a key fob, allowing them to gain unauthorized access to vehicles even when the legitimate owner is nearby. This highlights the weakness of relying solely on proximity-based authentication systems, which can be vulnerable to hacking.

Moreover, the traditional key system offers no form of verification beyond the physical possession of the key. This means that if a criminal manages to steal or find the key, they can easily gain access to and operate the vehicle without the need for additional authentication. This lack of multi-factor authentication leaves vehicles highly susceptible to theft and unauthorized use, especially when the key is misplaced or stolen.

Additionally, while modern anti-theft devices such as geo-location trackers and immobilizers have proven to be effective in some scenarios, they are not foolproof. Geo-location tracking devices, for instance, depend on GPS signals, which can be disrupted or jammed, leaving the vehicle vulnerable to theft. Immobilizers, on the other hand, can be bypassed by sophisticated criminals with knowledge of how to manipulate or disable these systems. These vulnerabilities expose the limitations of existing security systems in protecting vehicles against theft and unauthorized use.

Despite advancements in vehicle security, modern biometric access systems still face significant limitations. While biometric technologies like facial recognition and fingerprint scanning have been implemented in some vehicles, these systems often lack robustness and can be easily bypassed. Facial recognition systems, for instance, may function adequately in daylight conditions but can fail to operate reliably in low-light environments or at night. Similarly, fingerprint scanners may become unreliable in wet conditions, such as during rainy weather. These environmental dependencies create vulnerabilities in the security system, potentially allowing unauthorized access when biometric authentication fails. Furthermore, some biometric systems can be fooled by high-quality photographs or artificial fingerprints, compromising the vehicle's security

Therefore, there is a clear and pressing need to address the above-mentioned multifaceted challenges associated with security of accessing the vehicles. Existing technologies have made attempts to tackle these issues but often fall short in providing a comprehensive solution that balances security and reliability. The shortcomings of existing anti-theft devices, particularly with respect to false alarms, vulnerabilities to hacking, and the potential for bypassing security mechanisms, must be addressed to ensure that vehicles remain secure in an increasingly complex environment.

Further limitations and disadvantages of conventional and traditional approaches will become apparent to one of skill in the art, through comparison of described systems with some aspects of the present disclosure, as set forth in the remainder of the present application and with reference to the drawings.

### SUMMARY

The foregoing summary is illustrative only and is not intended to be in any way limiting. In addition to the illustrative aspects, embodiments, and features described above, further aspects, embodiments, and features will become apparent by reference to the drawings and the following detailed description.

In accordance with the embodiment illustrated herein, the present subject matter relates to a system for operating a vehicle. The system includes one or more biometric units disposed on the vehicle, configured to capture biometric data of a user attempting to operate the vehicle. A memory unit is provided to store biometric data of authorized users. Additionally, the system incorporates an ambient light sensor to detect ambient light levels within the vehicle. A processing unit, communicatively connected to the biometric units, memory unit, and ambient light sensor, determines the ambient light level and selects a biometric authentication method based on this level. The processing unit then validates the biometric data received from the biometric units against the stored data of authorized users. The processing unit disengages the immobilizer unit allowing one or more operation of one or more vehicular components upon the successful validation of the user's biometric data, whereas keeps the immobilizer unit engaged disallowing the operation of one or more vehicular components of the vehicle upon unsuccessful validation of the biometric data of the user.

Another aspect of the present subject matter involves the processing unit, which, upon an unsuccessful validation of the user's biometric data, transmits an output to one or more devices, such as a display, audio unit, illuminating device or personal device of a user to provide a warning alert about unauthorized attempt to operate the vehicle.

In accordance with the embodiment illustrated herein, the processing unit is further configured to select different biometric authentication methods based on the detected ambient light level. For instance, if the ambient light level is above a predetermined threshold, the processing unit selects facial recognition and fingerprint authentication. If the ambient light level is below the threshold, fingerprint authentication and voice recognition are selected.

Yet another aspect pertains to the system's ability to initiate a limp-home mode upon unsuccessful validation of the biometric data. The processing unit transmits an authorization request to the user's personal device, and upon receiving approval, enables operation of the vehicle.

In accordance with the embodiment illustrated herein, the biometric units include a variety of devices to ensure comprehensive user identification. These units include a fingerprint sensing unit, a voice recognition unit, an image capturing unit, and an iris capturing unit, each designed to capture specific biometric data of the user.

Yet another aspect of the present subject matter involves the memory unit, which stores multiple biometric profiles for each authorized user. This feature enhances the flexibility and security of the system by allowing multiple forms of biometric data to be associated with each user.

In accordance with the embodiment illustrated herein, the method for operating the vehicle involves detecting the ambient light level using the ambient light sensor, selecting the appropriate biometric authentication method based on the detected light level, and capturing the user's biometric data via the biometric units. The biometric data is then validated by the processing unit against a stored set of authorized users' data. The processing unit further disengages the immobilizer unit to allow operation of one or more vehicular components of the vehicle based on successful validation of biometric data of user, and keeps the immobilizer unit engaged to disallow the operation of one or more vehicular components of the vehicle based on unsuccessful validation of the biometric data of user.

Another aspect of the method involves transmitting a warning alert through one or more devices, including display devices, illuminating devices, audio units, or the personal device of the user, when the biometric data fails to validate.

In accordance with the embodiment illustrated herein, the method includes selecting the biometric authentication method by the processing unit based on the detected ambient light level. For example, if the light level is above a predetermined threshold, facial recognition and fingerprint authentication are chosen. If the light level is below the threshold, fingerprint authentication and voice recognition are selected.

Yet another aspect of the method involves initiating a limp-home mode upon unsuccessful biometric data validation. The system then transmits an authorization request to the personal device of the user, and the immobilizer unit is disengaged to enable the operation of one or more components of the vehicle upon receiving approval from the personal device. If the authorization request is denied, then the processing unit keeps the immobilizer unit engaged to disable the operation of one or more components of the vehicle.

In accordance with the embodiment illustrated herein, the method further includes transmitting a warning alert through one or more devices in the event of unsuccessful validation, ensuring prompt identification of unauthorized attempts to operate the vehicle.

In accordance with the embodiment illustrated herein, the biometric units employed in the method include fingerprint sensing, voice recognition, image capturing, and iris capturing units, ensuring a comprehensive and secure means of user authentication.

The memory unit of the system, which stores multiple biometric profiles for each authorized user, provides further security in vehicle operation, allowing the system to accommodate various users and authentication methods.

Lastly, the present subject matter also includes a non-transitory computer-readable medium that stores instructions for performing the aforementioned method, which, when executed by a processor, causes the processor to operate the system in accordance with the described embodiments.

### BRIEF DESCRIPTION OF THE DRAWINGS

The present invention will become more fully understood from the detailed description given herein below and the accompanying drawings which are given by way of illustration only and thus are not limitative of the present invention.
**Figure 1** shows a block diagram illustrative of one or more components of the vehicle incorporating the invention, in accordance with some embodiments of the present disclosure.
**Figure 2** illustrates a method for operating a vehicle, in accordance with some other embodiments of the invention.
**Figure 3** exemplarily illustrates a process flow of the system for operating a vehicle, in accordance with some other embodiments of the invention.

### DETAILED DESCRIPTION OF THE DRAWINGS

The present disclosure may be best understood with reference to the detailed figures and description set forth herein. Various embodiments are discussed below with reference to the figures. However, those skilled in the art will readily appreciate that the detailed descriptions given herein with respect to the figures are simply for explanatory purposes as the system may extend beyond the described embodiments. For example, the teachings presented, and the needs of a particular application may yield multiple alternative and suitable approaches to implement the functionality of any detail described herein. Therefore, any approach may extend beyond the particular implementation choices in the following embodiments described and shown.

References to "one embodiment," "at least one embodiment," "an embodiment," "one example," "an example," "for example," and so on indicate that the embodiment(s) or example(s) may include a particular feature, structure, characteristic, property, element, or limitation but that not every embodiment or example necessarily includes that particular feature, structure, characteristic, property, element, or limitation. Further, repeated use of the phrase "in an embodiment" does not necessarily refer to the same embodiment.

The present invention now will be described more fully hereinafter with different embodiments. This invention may, however, be embodied in many different forms and should not be construed as limited to the embodiments set forth herein; rather those embodiments are provided so that this disclosure will be thorough and complete, and fully convey the scope of the invention to those skilled in the art.

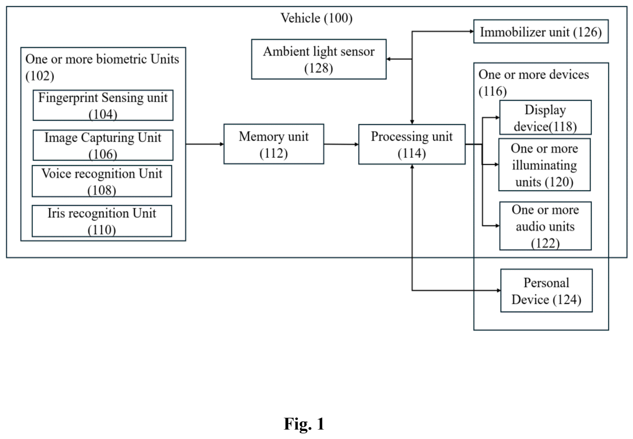

**Figure 1** shows a block diagram illustrative of one or more components of the vehicle 100 incorporating the invention, in accordance with some embodiments of the present disclosure.

With reference to Figure 1, the system includes a vehicle 100, one or more biometric units 102, an immobilizer unit 126, an ambient light sensor 128, a memory unit 112, and a processing unit 114. According to embodiments of the present invention, the automobile may be of any category such as, but not limited to, a three-wheeled road vehicle, a four-wheeled road vehicle, a bus, a truck, a locomotive, and so forth. Embodiments of the present invention are intended to include or otherwise cover any category of the vehicle, including known, related art, and/or later developed technologies.

In an embodiment of the present invention, the one or more biometric units 102 are disposed within the vehicle 100 and configured to capture biometric data from a user attempting to operate the vehicle 100. These biometric units 102 may include, but are not limited to, a fingerprint sensing unit 104, a Image capturing unit 106, an voice recognition unit 108, and an iris capturing unit 110. The placement of the biometric units 102 within the vehicle is strategic to ensure ease of access for the user while preventing tampering or unauthorized access to the units themselves. For example, a fingerprint sensor may be integrated into the steering wheel or ignition button, a camera for facial recognition may be positioned on the dashboard, and a voice recognition system may utilize microphones integrated into the vehicle's audio system.

The fingerprint sensing unit 104 may utilize capacitive, optical, or ultrasonic fingerprint sensors to capture the fingerprint of the user. The voice recognition unit 108 may employ speech recognition algorithms to analyze the user's voice and identify the speaker. The image capturing unit 106 may use a digital camera or infrared camera to capture facial features of the user. The iris capturing unit 110 may use an infrared camera and specialized algorithms to capture the unique patterns of the user's iris.

In an embodiment of the invention, the ambient light sensor 128 is configured to detect ambient light levels in the surrounding and transmit the data to the processing unit 114 of the current lighting conditions. The ambient light sensor 128 may include but is not limited to phototransistors, photodiodes, and photonic integrated circuits.

In another embodiment of the invention, the memory unit 112 is configured to store biometric data of a pre-defined set of authorized users. The memory unit 112 can be any form of non-volatile storage, such as flash memory or a hard drive, and may be integrated within the processing unit or exist as a separate component. The biometric data stored in the memory unit 112 comprises biometric profiles of authorized users.

In an embodiment of the present invention, the processing unit 114 is communicatively connected to the one or more biometric units 102, the immobilizer unit 126, ambient light sensor 128, and the memory unit 112. The processing unit 114 may include, but is not limited to, a Programmable Logic Controller (PLC), a microprocessor, a Central Processing Unit (CPU), a development board, a Field-Programmable Gate Array (FPGA), an Application-Specific Integrated Circuit (ASIC), or any combination thereof. The processing unit may be a microcontroller, a microprocessor, or any other suitable computing device capable of executing instructions and performing data processing. The communicative connection between the processing unit 114 and one or more biometric units 102, the immobilizer unit 126, ambient light sensor 128, and the memory unit 112 can be wired (e.g., via USB, Ethernet) or wireless (e.g. Bluetooth, Wi-Fi). The wireless communication may use any of a plurality of communication standards, protocols and technologies, such as Global System for Mobile Communications (GSM), Enhanced Data GSM Environment (EDGE), wideband code division 10 multiple access (W-CDMA), code division multiple access (CDMA), time division multiple access (TDMA), Bluetooth, Wireless Fidelity (Wi-Fi) (e,g., IEEE 802.11a, IEEE 802.11b, IEEE 802.11g and/or IEEE 802.11n), voice over Internet Protocol (VoIP), Wi-MAX.

In an embodiment of the present invention, the processing unit 114 comprises multiple integrated sub-units designed to perform a variety of functions essential for operating one or more components of the vehicle 100. These sub-units operate in concert to receive, analyze, and process one or more bio-metric data, as well as to execute appropriate actions based on the results of this analysis. The processing unit 100 may include, but is not limited to, sub-units for input handling, feature extraction, data comparison, decision-making, alert generation, and system actuation.

In an embodiment of the present invention, when a user attempts to operate the vehicle 100, the ambient light sensor 128 detects the lighting conditions in the surrounding. The ambient light sensor 128 sends the output to the processing unit 114. The processing unit further determines the biometric authentication methods to be used to start the authentication of the user. In an event, when the ambient light level is above the pre-determined threshold of 150 lux, the biometric authentication method used are at least two of fingerprint sensing unit 104, Image capturing unit 106 and Iris Recognition unit 110 to verify the user, When the ambient light level is below the pre-determined threshold of 150 Lux, the biometric authentication method used are fingerprint sensing unit 104 and voice recognition unit 108.

In an embodiment of the present invention, the one or more biometric units 102 capture the user's biometric data. This data is then transmitted to the processing unit 114. The processing unit 114 receives the biometric data and validates it against the biometric data of the pre-defined set of authorized users stored in the memory unit 112.

The validation process involves comparing the captured biometric data with the stored biometric profiles. This comparison may involve complex algorithms and statistical analysis to ensure accurate and reliable authentication. For example, fingerprint data might be compared using minutiae matching, voice data might be analysed using spectral analysis, facial features might be compared using feature extraction and comparison, and iris patterns might be analysed using pattern recognition algorithms.

Upon successful validation of the biometric data, the processing unit 114 disengages the immobilizer unit 126 to allow the operation of one or more vehicular components. These vehicular components may include, but are not limited to, the engine ignition system, the door locking system, the steering system, and the infotainment system. Operating these components allows the authorized user to start the engine, unlock the doors, control the vehicle 100, and use the vehicle's features.

In the event of an unsuccessful validation of the biometric data, the processing unit 114 keeps the immobilizer unit 126 engaged to disallow the operation of one or more vehicular components and transmits an output to one or more devices 116 indicative of a warning alert. This warning alert serves to notify the user and potentially others that an unauthorized attempt to operate the vehicle 100 has occurred. The vehicular components may include, but are not limited to, the engine ignition system, the door locking system, the steering system, and the infotainment system. Disallowing the operation of these components prevents the unauthorized user to start the engine, unlock the doors, control the vehicle 100, and use the vehicle's features.

In an embodiment of the present invention, In the event of failed authentication, the processing unit 114 initiates a limp-home mode, preventing vehicle operation while a second secure authentication process is pursued. The system then transmits an authorization request to the user's personal device 124, and upon receiving approval, the vehicle can be activated. The system can send an authorization request to the user via a mobile app, voice assistant, or SMS. The user can approve or deny access through biometric authentication, PIN, QR code scan, or Bluetooth pairing. Additional methods include web portals, OTPs, social media verification, or proximity-based authorization.

In an embodiment, the memory unit 112 is configured to store multiple biometric profiles for each authorized user. This allows for greater flexibility and redundancy in the authentication process. For example, a user may have multiple fingerprint profiles (e.g., from different fingers), multiple voice samples, and multiple facial images stored in the memory unit. This ensures that the system can still authenticate the user even if one form of biometric data is compromised or unavailable.

The one or more devices 116 that receive the warning alert may include a display device 118, one or more illuminating devices 120, one or more audio units 122, and a personal device 124 of the user. The display device 118 may display a message indicating that the authentication has failed. The illuminating devices 120 may flash the headlights or other lights to attract attention. The audio units 122 may emit an audible alarm. The personal device 124 of the user may receive a notification via a mobile app or SMS message.

The display device 118 may include the instrument cluster, head-up displays (HUD), infotainment displays, navigation displays, rear-view camera displays, rear seat entertainment displays, climate control displays, digital rearview mirrors, instrument panel displays, side mirror displays, and any other screens located within the viewing range of the vehicle user. In a preferred embodiment, the display device 118 is an instrument cluster of the vehicle 100. In another embodiment, the display device 118 is a negative Liquid Crystal Display (LCD) type display with high contrast resulting in higher readability in certain conditions such as in bright sunlight, and in low-light conditions.

The one or more illuminating devices 120 may include head lamps, tail lamps, turn signal lamps, hazard lamps, fog lamps, cabin lights, instrument cluster lights, telltale indicators, displays, screens, and any source of light within the viewing range of the vehicle user.

The one or more audio units 122 of the vehicle 100 may include a vehicle audio system, a horn, a beeping device, any other device in the vehicle capable of producing an output in sound. The one or more audio unit 122, upon receiving the output from the processing unit 114, output a warning alert which may be audibly heard by the vehicle user. The warning alert may be a beeping noise, a buzzing noise, a warning message, a sharp sound, or any other noise capable of catching the attention of a vehicle user.

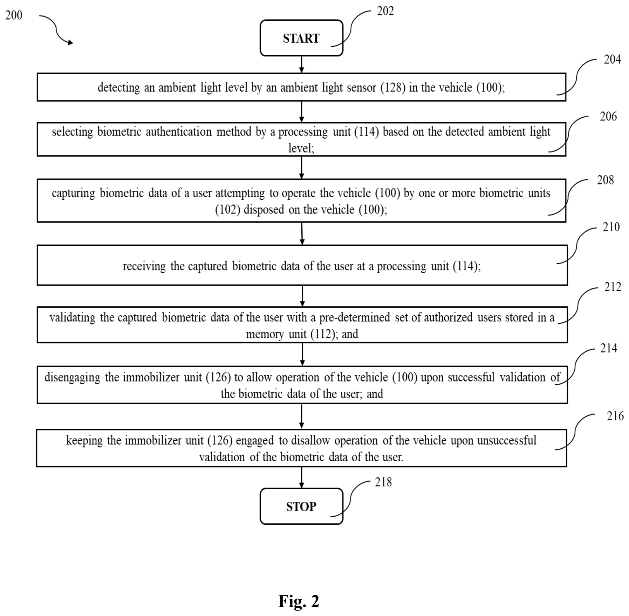

**Figure 2** illustrates a method 200 for operating a vehicle 100 based on biometric authentication, in accordance with some embodiments of the invention.

With reference to Figure 2, the method 200 begins at step 202 and proceeds to step 204. At step 204, the method 200 involves detecting the ambient light level by an ambient light sensor 128 within the vehicle 100. The ambient light sensor 128 detects ambient light level in environmental light conditions, which will influence the choice of biometric authentication methods. The method then progresses to step 206.

At step 206, the method 200 involves selecting a biometric authentication method based on the detected ambient light level. The processing unit 114, upon receiving the data from the ambient light sensor 128, decides which biometric authentication method is most suitable for the current lighting conditions. In an event, when the ambient light level is above the pre-determined threshold of 150 lux, the biometric authentication method used are at least two of fingerprint sensing unit 104, Image capturing unit 106 and Iris Recognition unit 110 to verify the user, When the ambient light level is below the pre-determined threshold of 150 Lux, the biometric authentication method used are fingerprint sensing unit 104 and voice recognition unit 108. The method 200 then proceeds to step 208.

At step 208, the method 200 comprises capturing biometric data of a user attempting to operate the vehicle 100. One or more biometric units 102 disposed in the vehicle 100, such as fingerprint sensing units, image capturing units, voice recognition units, or iris capturing units, are used to capture data from the user. The method 200 then proceeds to step 210.

At step 210, the method 200 comprises receiving the captured biometric data at a processing unit 114. The biometric data is sent from the biometric units 102 to the processing unit 114 for validation. This captured data is then compared to stored biometric profiles of authorized users, which are kept in a memory unit 112. The method then advances to step 212.

At step 212, the method 200 involves validating the captured biometric data with the pre-determined set of authorized users stored in the memory unit 112. The processing unit 114 compares the received biometric data with the stored profiles, employing algorithms and statistical techniques to ensure that the user is authorized to operate the vehicle. If validation is successful, the method 200 proceeds to step 214.

At step 214, the method 200 comprises operating one or more vehicular components upon successful validation of the biometric data. Once the user is validated, the processing unit 114 disengages the immobilizer unit 126 and operates one or more vehicular components, such as the engine ignition system, the door locking system, the steering system, and the infotainment system. This allows the authorized user to start the engine, unlock the doors, control the vehicle 100, and use the vehicle's features. The method 200 then ends at 218.

At step 212, the method 200 comprises keeping the immobilizer unit 126 engaged to disallow operation of one or more vehicular components based on unsuccessful validation of the biometric data of the user. Upon unsuccessful validation, the processing unit 114 keeps the immobilizer unit 126 engaged and prevents the operation of one or more vehicular components, such as the engine ignition system, the door locking system, the steering system, and the infotainment system. This prevents the unauthorized user from starting the engine, unlocking the doors, controlling the vehicle 100, and using the vehicle's features. The method 200 then stops at step 214.

In one embodiment of the present invention, if the biometric data fails validation, the method 200 further includes a step, which involves transmitting a warning alert to one or more devices 116. These devices could include a display device 118, one or more illuminating devices 120, one or more audio units 122, and a personal device 124 of the user. This warning alert indicates that the authentication attempt was unsuccessful, notifying the user and potentially others of the unauthorized attempt.

In one embodiment of the present invention, the one or more devices 116 include, but are not limited to, a display device 118, one or more illuminating devices 120, one or more audio units 122, and a personal device 124. The display device 118 may show an alert message indicating the failed authentication, while the illuminating devices 120 may flash the vehicle's lights to attract attention. The audio units 122 may emit a beeping or alarm sound, and the personal device 124 may receive an SMS or mobile app notification indicating the failed authentication attempt.

In another embodiment, the memory unit 112 is configured to store multiple biometric profiles for each authorized user, allowing greater flexibility in the authentication process. For example, each user may have several biometric profiles, including multiple fingerprint profiles, voice samples, facial images, or iris patterns, stored to ensure that the system can still authenticate the user even if one biometric modality is unavailable or compromised.

In one embodiment, the method further comprises initiating a limp-home mode upon unsuccessful validation of biometric data. In this mode, the vehicle is prevented from being operated while the system pursues more secure authentication methods.

The method 200 further involves transmitting an authorization request to the personal device 124 of the user in case of a failed biometric authentication. Upon receiving the approval from the user's personal device 124, the processing unit 114 disengages the immobilizer unit 126 and operates one or more vehicular components, such as the engine ignition system, the door locking system, the steering system, and the infotainment system.

The above-described method provides a solution for biometric authentication in vehicles, ensuring that only authorized users can operate the vehicle while enhancing convenience by dynamically adjusting authentication methods based on ambient lighting conditions.

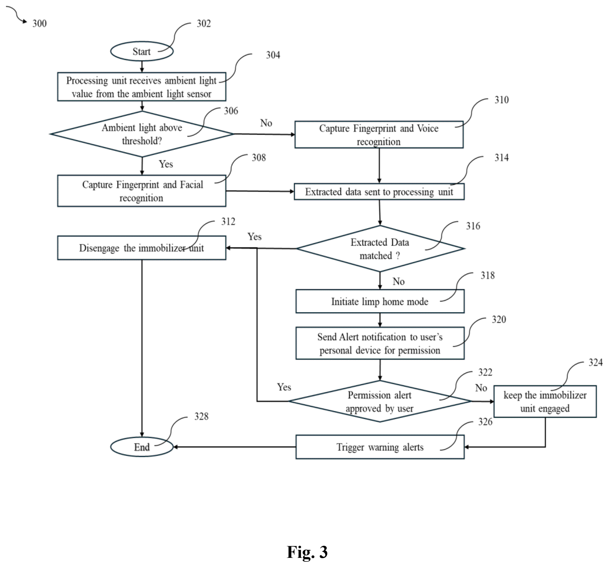

Figure 3 illustrates a process flow for operating a vehicle based on biometric authentication

With reference to Figure 3, the process flow 300 begins at step 302 and proceeds to step 304.

At step 304, the ambient light sensor 128 detects the ambient light level, the processing unit 114 receives the ambient light level from the ambient light sensor 128. The process flow 300 then proceeds to step 306.

At step 306, the processing unit determines if the ambient light level is above the pre-determined threshold. The process flow 300 branches to either step 308 or step 310 based on the outcome of the ambient light sensor 128.

At step 308, If the ambient light level is above pre-determined threshold for ambient light, the processing unit 114 selects as fingerprint sensing unit 104 and image capturing unit 106 as biometric authentication method to initiate the authentication process. The process flow 300 then proceeds to step 314.

At step 310, If the ambient light level is below the pre-determined threshold for ambient light, the processing unit 114 selects as fingerprint sensing unit 104 and voice recognition unit 108 as biometric authentication method to initiate the authentication process. The process flow 300 then proceeds to step 314.

At step 314, one or more biometric units 102 disposed in the vehicle 100 capture one or more biometric data of the user attempting to operate the vehicle 100. The biometric data may include fingerprint data, voice data, facial features, or iris patterns, depending on the selected biometric authentication method. The one or more biometric units 102 are strategically positioned within the vehicle 100 for convenient capture of the user's biometric information. The process flow 300 then proceeds to step 316.

At step 316, the processing unit 114 receives the captured biometric data of the user from the one or more biometric units 102 and validates the biometric data of the user with biometric data of a pre-defined set of authorized users stored in a memory unit 112. The processing unit 114 accesses the memory unit 112 and compares the captured biometric data with the stored biometric profiles. This validation process may involve complex algorithms and statistical analysis to ensure accurate and reliable authentication. The process flow 300 branches to either step 312 or step 318 based on the outcome of the validation.

At step 312, if the validation is successful, the processing unit 114 disengages the immobilizer unit 126 to allow the operation of one or more vehicular components of the vehicle 100. The vehicular components may include the engine ignition system, the door locking system, the steering system, and the infotainment system. Operating these components allows the authorized user to start the engine, unlock the doors, control the vehicle, and use the vehicle's. The process ends at step 328.

At step 318, if the validation is unsuccessful, the processing unit 114 initiates a limp-home mode and transmits an output to one or more devices 116 indicative of a warning alert. This warning alert serves to notify the user and potentially others that an unauthorized attempt to operate the vehicle 100 has occurred. The process flow 300 then proceeds to step 320.

At step 320, The processing unit 114 further transmits an authorization request to the personal device 124 of the user in case of a failed biometric authentication. The process flow 300 then proceeds to step 322.

At step 322, The processing unit 114 further receives the input from the personal device 124 of the user about the approval of the authorization request. The process flow 300 branches to either step 324 or step 312 based on the outcome of the authorization request.

At step 312, Upon receiving the approval from the user's personal device 124, the processing unit 114 disengages the immobilizer unit 126 to allow the operation of one or more components of the vehicle without further authentication steps. The process flow 300 ends at 328.

At step 324, if the authorization request is declined from the user's personal device 124, the processing unit 114 keeps the immobilizer unit 126 engaged to disallow the user to operate the vehicle 100. The process flow 300 then proceeds to step 326.

At step 326, the processing unit 114 transmits an output to one or more devices 116 indicative of a warning alert. This warning alert serves to notify the user and potentially others about an unauthorized attempt to operate the vehicle 100. The process flow 300 ends at 328.

At step 328, the process flow ends. The outcome of either successful operation of vehicular components or transmission of a warning alert concludes the process flow.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise. The terms "including", "comprising", "having" and variations thereof mean "including but not limited to", unless expressly specified otherwise. The terms "a", "an" and "the" mean "one or more", unless expressly specified otherwise.

The claimed invention provides a system and a method for operating a vehicle using biometric authentication while ensuring accuracy, reliability, efficiency, customer comfort, and safety.

In light of the above-mentioned advantages and the technical advancements provided by the disclosed system and method, the claimed system and the undertaken method of operation as discussed above are not routine, conventional, or well understood in the art, as the claimed system and claimed method enable the following solutions to the existing problems in conventional technologies. The claimed system and constructional features provide a technical solution to a technical problem.

Finally, the language used in the specification has been principally selected for readability and instructional purposes, and it may not have been selected to delineate or circumscribe the inventive subject matter and is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. A person with ordinary skills in the art will appreciate that the systems, modules, and sub-modules have been illustrated and explained to serve as examples and should not be considered limiting in any manner. It will be further appreciated that the variants of the above disclosed system elements, modules, and other features and functions, or alternatives thereof, may be combined to create other different systems or applications. Those skilled in the art will appreciate that any of the aforementioned system modules may be suitably replaced, reordered, or removed, and additional steps and/or system modules may be inserted, depending on the needs of a particular application.

While the present disclosure has been described with reference to certain embodiments, it will be understood by those skilled in the art that various changes may be made, and equivalents may be substituted without departing from the scope of the present disclosure. In addition, many modifications may be made to adapt a particular situation or material to the teachings of the present disclosure without departing from its scope. Therefore, it is intended that the present disclosure is not limited to the particular embodiment disclosed, but that the present disclosure will include all embodiments falling within the scope of the appended claims.

### List of Reference Numerals

100: Vehicle
102: One or more biometric units
104: Fingerprint sensing unit
106: Voice recognition unit
108: Image capturing unit
110: Iris capturing unit
112: Memory unit
114: Processing unit
116: One or more devices
118: Display device
120: One or more illuminating devices
122: One or more audio units
124: A personal device
126: Immobilizer unit
128: Ambient light sensor

## Claims

1. A system for accessing a vehicle (100), the system for accessing the vehicle (100) comprising:
one or more biometric units (102) disposed in the vehicle (100), the one or more biometric units (102) being configured to capture one or more biometric data of a user attempting to operate the vehicle (100);
a memory unit (112) configured to store biometric data of a pre-defined set of authorized users;
an immobilizer unit (126) configured to prevent or allow operation of the vehicle (100) based on validation of biometric data;
an ambient light sensor (128) configured to detect ambient light levels; and
a processing unit (114) communicatively connected to the one or more biometric units (102) and the immobilizer unit (126), wherein the processing unit (114) is configured to:
determine the ambient light level from the ambient light sensor (128);
select a biometric authentication method based on the ambient light level;
receive the biometric data of the user from the one or more biometric units (102);
validate the biometric data of the user with the stored biometric data using the selected biometric authentication method;
disengage the immobilizer unit (126) and allow operation of the vehicle (100) upon successful biometric validation; and
keep the immobilizer unit (126) engaged and disallow the operation of the vehicle (100) upon unsuccessful biometric validation.

2. The system as claimed in claim 1, wherein said processing unit (114) being configured to upon an unsuccessful validation of the biometric data of the user, transmit an output to one or more devices (116) indicative of a warning alert.

3. The system as claimed in claim 2, wherein the one or more devices (116) comprise at least one of:
a display device (118);
one or more illuminating devices (120);
one or more audio units (122); and
a personal device (124) of the user.

4. The system as claimed in claim 1, wherein the processing unit (114) is further configured to:
select facial recognition and fingerprint authentication when the ambient light level is above a predetermined threshold; and
select fingerprint authentication and voice recognition when the ambient light level is below the predetermined threshold.

5. The system as claimed in claim 1, wherein the processing unit (114) is further configured to:
initiate a limp-home mode upon unsuccessful validation of the biometric data;
transmit an authorization request to the personal device (124) of the user; and
disengage the immobilizer unit (126) and allow operation of the vehicle (100) upon receiving approval from the personal device (124) of the user.

6. The system as claimed in claim 1, wherein the one or more biometric units (102) comprises:
a fingerprint sensing unit (104);
a voice recognition unit (106);
an image capturing unit (108); and
an iris capturing unit (110).

7. The system as claimed in claim 1, wherein the memory unit (112) is configured to store multiple biometric profiles for each authorized user.

8. A method (200) for accessing a vehicle (100), the method (200) comprising:
detecting an ambient light level by an ambient light sensor (128) in the vehicle (100);
selecting biometric authentication method by a processing unit (114) based on the detected ambient light level;
capturing biometric data of a user attempting to operate the vehicle (100) by one or more biometric units (102) disposed on the vehicle (100);
receiving the captured biometric data of the user at a processing unit (114);
validating the captured biometric data of the user with a predetermined set of authorized users stored in a memory unit (112);
disengaging the immobilizer unit (126) to allow operation of the vehicle (100) upon successful validation of the biometric data of the user; and
keeping the immobilizer unit (126) engaged to disallow operation of the vehicle upon unsuccessful validation of the biometric data of the user.

9. The method (200) as claimed in claim 8, comprising a step transmitting an output to one or more devices (116) indicative of a warning alert upon unsuccessful validation of the biometric data of the user.

10. The method as claimed in claim 9, wherein the one or more devices (116) comprise at least one of:
a display device (118);
one or more illuminating devices (120);
one or more audio units (122); and
a personal device (124) of the user.

11. The method as claimed in claim 8, wherein selecting the biometric authentication method comprises:
selecting facial recognition and fingerprint authentication when the ambient light level is above a predetermined threshold;
selecting fingerprint authentication and voice recognition when the ambient light level is below the predetermined threshold.

12. The method as claimed in claim 8, the method further comprising;
initiating a limp-home mode upon unsuccessful validation of the biometric data;
transmit an authorization request to the personal device (124) of the user; and
disengage the immobilizer unit (126) and allow operation of the vehicle (100) upon receiving approval from the personal device (124) of the user.

13. The method of claim 8, wherein capturing one or more biometric units (102) comprises:
a fingerprint sensing unit (104);
a voice recognition unit (106);
an image capturing unit (108); and
an iris capturing unit (110).

14. The method as claimed in claim 8, wherein the memory unit (112) is configured to store multiple biometric profiles for each authorized user.

15. A non-transitory computer-readable medium storing instructions that, when executed by a processor, cause the processor to perform the method of claim 8.
